# EUROPEAN PATENT APPLICATION

(11) **EP 2 913 023 A1**
(43) Date of publication of application: **02.09.2015**
(21) Application number: 14000685.9
(22) Date of filing: 26.02.2014
(51) Int. Cl.: A61C 8/00

(54) **Set of elements and method for making a reinforcing structure**

(71) Applicant: P.P.M. S.R.L. di Giacomini Manuele e Monica, 33010 Pagnacco (UD) (IT)
(72) Inventor: Cuiuli, Vincenzo, 33010 Pagnacco (UD) (IT)
(74) Representative: D'Agostini, Giovanni

(57) **Abstract**

Set of elements intended to be reciprocally assembled to constitute a structure (1) adapted to be installed on one or more implants (7) installed on a dental arch, wherein said set comprises supports (3) and at least one connection element (2, 2', 2'', 2''', 2'''') selected from a series of connection elements configured and structured to couple with the supports (3).

## Description

### Technical Field

The present invention relates to a set of elements intended to be reciprocally assembled to constitute a supporting structure for a dental prosthesis according to the characteristics of the pre-characterizing part of claim 1.
The present invention also relates to a structure (1) adapted to be incorporated within a dental prosthesis (6) according to the characteristics of the pre-characterizing part of claim 16.
The present invention also relates to a method for making a dental prosthesis according to the characteristics of the pre-characterizing part of claim 18.
The present invention also relates to a dental prosthesis according to the characteristics of the pre-characterizing part of claim 19.

### Definitions

In the present description and in the appended claims the following terms must be understood according to the definitions given in the following.
In the present description, except where otherwise indicated, the term "dental prosthesis" must be understood as indicating both temporary and permanent prostheses, as well as prostheses including a group of reciprocally adjacent teeth, prostheses comprising a whole dental arch, upper or lower total prostheses.

### Prior Art

In the field of the production of complete or partial dental prostheses one resorts to a prosthesis made up of a body on which synthetic dental elements are mounted, in which the body of the prosthesis is provided with supports that couple with corresponding screws, called implants, which are fixed in the upper jaw bone or in the lower jaw bone. The coupling between the supports and the implants generally occurs by means of fixing screws.
The process for making a prosthesis involves a repeated exchange of information between the doctor who performs the surgery for inserting the implants into the upper jaw bone and the technician who prepares the prosthesis. In general, the technician initially prepares a temporary prosthesis that allows to load the implants within 24-48 hours from the insertion of the implants into the upper jaw bone with the advantage that the implants are maintained in the position in which they were installed preventing adjustments in the reciprocal position of the implants during the period in which the osseointegration, that is to say, the actual incorporation of the implant into the upper jaw or lower jaw bone, occurs, and during the period in which the recovery after the surgery for the application of the implants occurs. In fact, a variation in the reciprocal position of the implants may jeopardize or make difficult the following phase of application of the permanent prosthesis.

To allow the technician to make a temporary prosthesis that couples perfectly with the implants installed by the doctor, in general the doctor mounts on the implants some temporary supports, called "impression copings". Some prior art solutions provide that the impression copings are joined to one another by melting a suitable metal material of connection or other materials or incorporated within a negative cast of the mounting zone of the prosthesis. Afterwards, the doctor transmits such cast to the technician and the technician obtains from it a positive element with the supports mounted in a position corresponding to that of the negative cast and that constitutes a test element for checking that the mounting occurs without difficulty. Only following such checks the technician makes the prosthesis to be given to the doctor again, who tests its mounting on the implants.

### Problems of the Prior Art

In the prior art solutions there may be errors in the methods used to reciprocally transmit between the doctor and the technician the information relative to the reciprocal positioning of the implants in order to obtain the perfect coupling with the supports of the prosthesis. An error in the measurement, in the transmission of the information or in the making of the temporary prosthesis cause the need, in the best case, to resort to adjustments during the work or, in the worst case, the remaking of the whole or part of the process for making the temporary prosthesis. Furthermore, the resort to temporary supports reciprocally fixed by a connection material does not ensure the absence of errors because the used materials often do not ensure a perfect maintenance of the position due to possible load forces present during their fixing or due to the nature of the materials used, which may be subject to shrinkage or dimensional variations after that their shaping has occurred. For example, in the case of the resort to acrylic resins, these continue to polymerize and to shrink also for 24 hours after the first hardening, affecting the precision of the process.

### Aim of the Invention

The aim of the present invention is to provide a method for making a dental prosthesis that is faster and more reliable with respect to the prior art solutions.

A further aim of the present invention is to provide a set of elements intended to be reciprocally assembled to constitute a supporting structure for a dental prosthesis that facilitates and fastens the operations of detection of the actual position of the implants and to facilitate a reliable transmission of such information to the technician who will have to make the prosthesis.

### Concept of the Invention

The aim is achieved with the characteristics of the main claim. The sub-claims represent advantageous solutions.

### Advantageous Effects of the Invention

The solution according to the present invention, by the considerable creative contribution the effect of which constitutes an immediate and important technical progress, presents various advantages.
The solution of the present invention allows to fasten the phases of taking of the impression on the basis of which the prosthesis is made and also the measurement of the vertical dimension of implants and supports.
Furthermore, the solution of the present invention allows to reach greater precision in the transmission of the information between the doctor and the technician as well as in the making of the prosthesis.
Furthermore, the solution of the present invention allows to obtain prostheses reinforced with an internal supporting structure that ensures their dimensional stability and allows to use a method similar to the one used to obtain temporary prostheses for the purpose of obtaining in a very short time a prosthesis that can also be considered permanent, notwithstanding the short time of preparation of the latter. As a consequence, the present invention also allows to obtain advantages in terms of time, of the cost of the final product as well as from the point of view of the patient who in a very short time can benefit from a temporary prosthesis with characteristics very similar to the permanent one and that at worst can constitute itself a permanent prosthesis.
The solution of the present invention allows in a simple and effective way for a high degree of adaptability to the various shapes of the mouth of the patient and to the position of the implants.
Advantageously, the solution according to the present invention is applicable independently of the type of implant used.

### Description of the Drawings

In the following a solution is described with reference to the enclosed drawings to be considered as a non-exhaustive example of the present invention in which:
Fig. 1 represents a perspective schematic view showing a first phase of the method of the present invention.
Fig. 2 represents a schematic view showing the first phase of the method of the present invention according to a partially sectional front view.
Fig. 3 represents a perspective schematic view showing a further phase of the method of the present invention.
Fig. 4 represents a perspective schematic view showing a following phase of the method of the present invention.
Fig. 5 represents a perspective schematic view showing the reinforcing structure of the present invention.
Fig. 6 represents a perspective schematic view showing the reinforcing structure of the present invention.
Fig. 7, Fig. 8, Fig. 9 represent schematic views of different embodiments of the reinforcing structure of the present invention.
Fig. 10 represents a perspective schematic view of a prosthesis of the present invention in which a portion has been removed to let catch sight of the internal reinforcing structure.
Fig. 11, Fig. 12, Fig. 13 represent perspective views of a first embodiment of the components of the reinforcing structure of the present invention.
Fig. 14, Fig. 15, Fig. 16 represent perspective views of a second embodiment of the components of the reinforcing structure of the present invention.
Fig. 17, Fig. 18, Fig. 19 represent perspective views of a third embodiment of the components of the reinforcing structure of the present invention.
Fig. 20, Fig. 21, Fig. 22 represent perspective views of a fourth embodiment of the components of the reinforcing structure of the present invention.
Fig. 23, Fig. 24, Fig. 25 represent perspective views of a fifth embodiment of the components of the reinforcing structure of the present invention.
Fig. 26, Fig. 27, Fig. 28 represent perspective views of a sixth embodiment of the components of the reinforcing structure of the present invention.
Fig. 29, Fig. 30, Fig. 31 represent perspective views of a seventh embodiment of the components of the reinforcing structure of the present invention.
Fig. 32, Fig. 33, Fig. 34 represent perspective views of an eighth embodiment of the components of the reinforcing structure of the present invention.
Fig. 35 represents a perspective view of a ninth embodiment of the components of the reinforcing structure of the present invention.
Fig. 36, Fig. 37 represent perspective views showing the use of the components of Fig. 35 for making the reinforcing structure of the present invention.
Fig. 38 represents a perspective view of a tenth embodiment of the components of the reinforcing structure of the present invention.
Fig. 39 represents a perspective view of an eleventh embodiment of the components of the reinforcing structure of the present invention.

### Description of the Invention

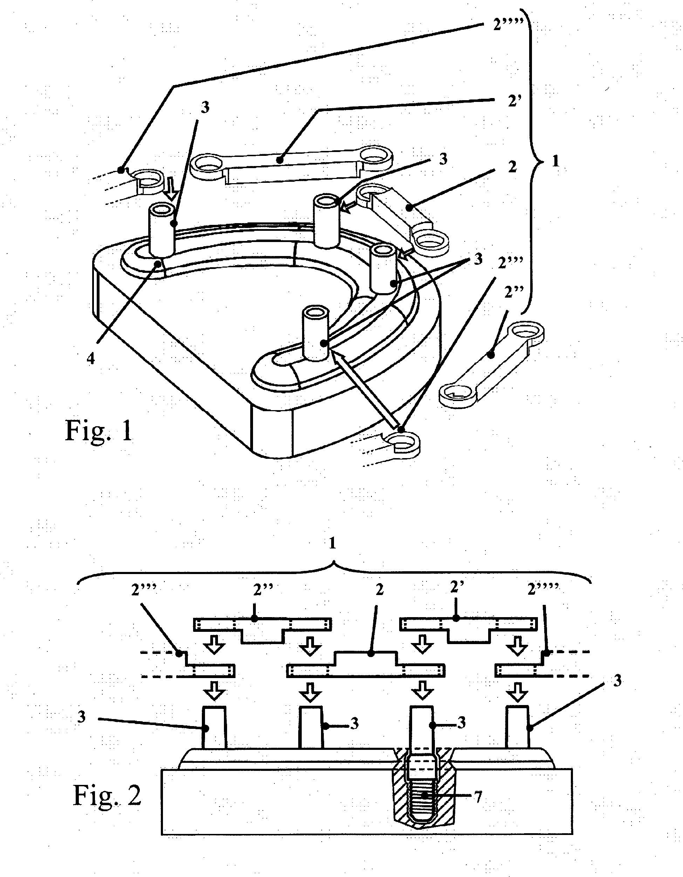

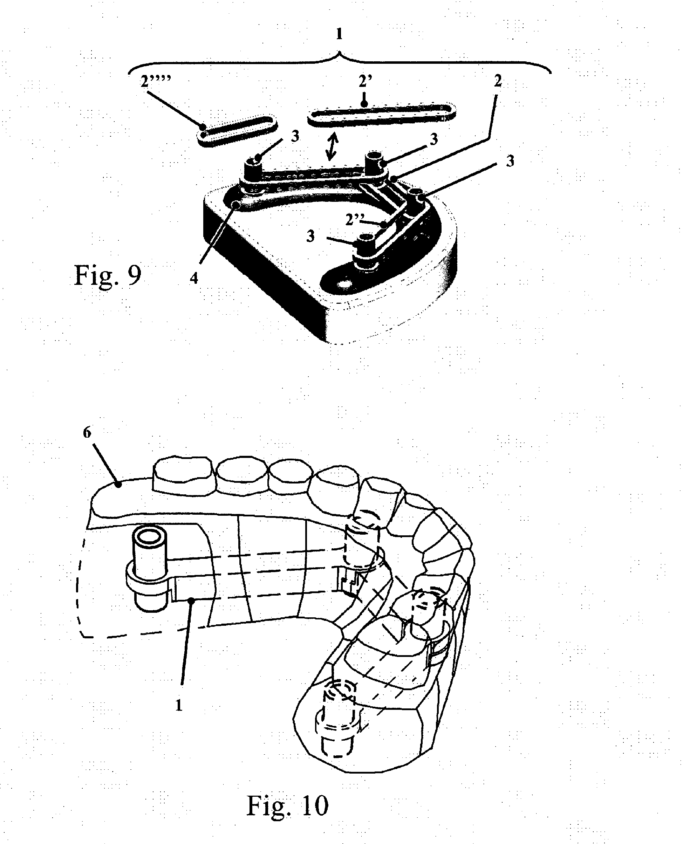

With reference to the Figures (Fig. 1, Fig. 2, Fig. 3, Fig. 4, Fig. 5, Fig. 6, Fig. 7, Fig. 8, Fig. 9) the structure (1) of the present invention is made up of a set of elements intended to be reciprocally assembled to constitute the reinforcing structure (1) that is used both to reciprocally transmit the information between the doctor and the technician with regard to the reciprocal positioning (Fig. 2) of the implants (7) installed on a dental arch (4) of a patient, and to make (Fig. 10) the prosthesis (6) incorporating the structure (1) itself.

The method of the present invention provides a set of bars or connection elements (2, 2', 2", 2"', 2"") in the form of rigid bars having different shapes and scaled in length according to different lengths that indicatively can be included in a range of 6 mm to 30 mm and thicknesses in a range of 1 mm to 5 mm. The bars or connection elements (2, 2', 2", 2"', 2"") can be made of an essentially rigid material such as stainless steel, titanium, carbon or carbon fibre or, in general biocompatible materials. It will be evident, however, that for the purpose of the present invention the material used is not particularly important. The sectional shape of the bars or connection elements (2, 2', 2", 2"', 2"") can be indifferently square, quadrangular, circular, oval or of other shapes.

The method of operation is conceived in such a way that the doctor, once the installation of the implants (7) on a dental arch (4) of a patient has been carried out, applies (Fig. 1, Fig. 2) on them the supports (3). Advantageously, as will be clear from the present description, the solution of the present invention allows to eliminate the resort to the so-called impression copings because one can use directly some supports (3) that are the same used for the permanent prosthesis. Once the supports (3) have been applied, the doctor can in fact directly proceed to the their adjustment in height on the basis of the shape of the oral cavity of the patient obtaining some temporary stumps that will be used for mounting the bars or connection elements (2, 2', 2", 2"', 2"").

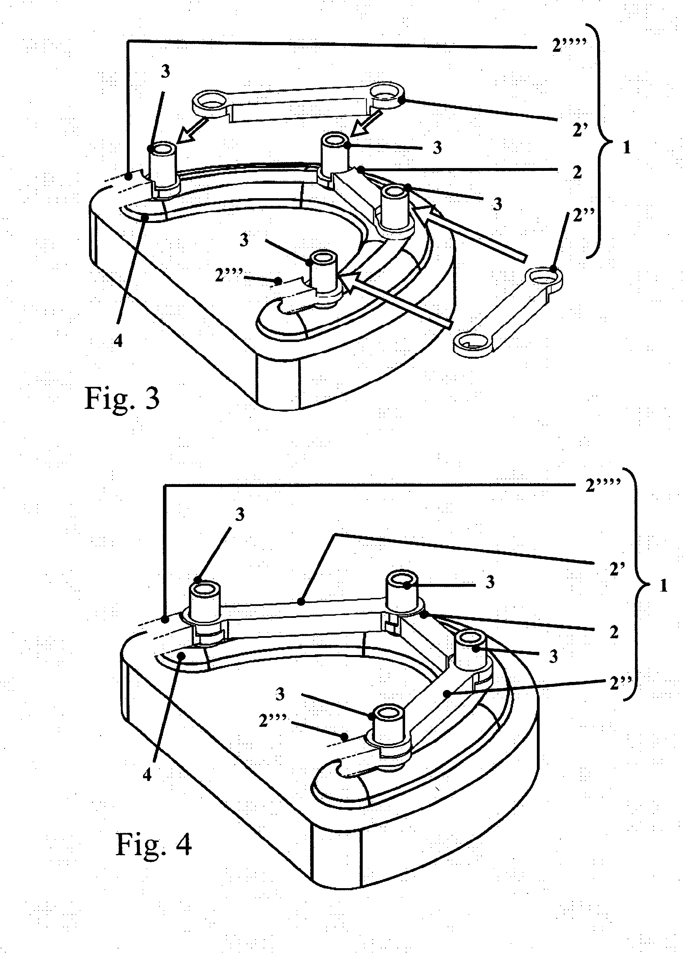

The doctor will have at his/her disposal bars or connection elements (2, 2', 2", 2"', 2"") of different types and length and, therefore, will only have to locate among the available bars or connection elements (2, 2', 2", 2"', 2"") a specific first bar or first connection element (2, 2', 2", 2"', 2"") having a length corresponding to the distance between a first pair of supports (3) adjacent to each other in a condition of mounting on the implants (7) within the oral cavity of the patient. Once the first bar or first connection element (2, 2', 2", 2"', 2"") of the correct length has been located, the doctor will apply it on the pair of adjacent supports (3) and will then locate a second bar or second connection element (2, 2', 2", 2"', 2"") to be applied between one of the supports of the first pair of previously considered supports and the following support (3) in the sequence of the supports mounted on the implants (7), thus applying the second bar or second connection element (2, 2', 2", 2"', 2"") on the second pair of supports (3). The process continues until (Fig. 4) the doctor has completed a structure (1) that connects to one another all the supports (3) present in the dental arch (4) of the patient. The operation of locating the bar or connection element (2, 2', 2", 2"', 2"") of the correct size corresponding to the distance between two adjacent supports can also occur with the aid of a measuring system such as a periodontal probe. In this way the doctor will rapidly locate the bar or connection element (2, 2', 2", 2"', 2"") of the correct size to apply it between two adjacent supports (3).

If necessary, in the zones of the oral cavity that have a greater space in height, one can use two bars or connection elements (2, 2', 2", 2"', 2"") placed superimposed between the same supports (3) in order to obtain a stronger structure (1), this solution being particularly suitable, for example, in the case of the back zones of the dental arch or in the case of overhanging elements, that is to say, elements in which the bar or connection element (2, 2', 2", 2"', 2"") that is at the end of the structure (1) is constrained at one of its first ends to only one support (3) while the other end of the bar or connection element (2, 2', 2", 2"', 2"") is not constrained to any support thus constituting an overhanging structure.

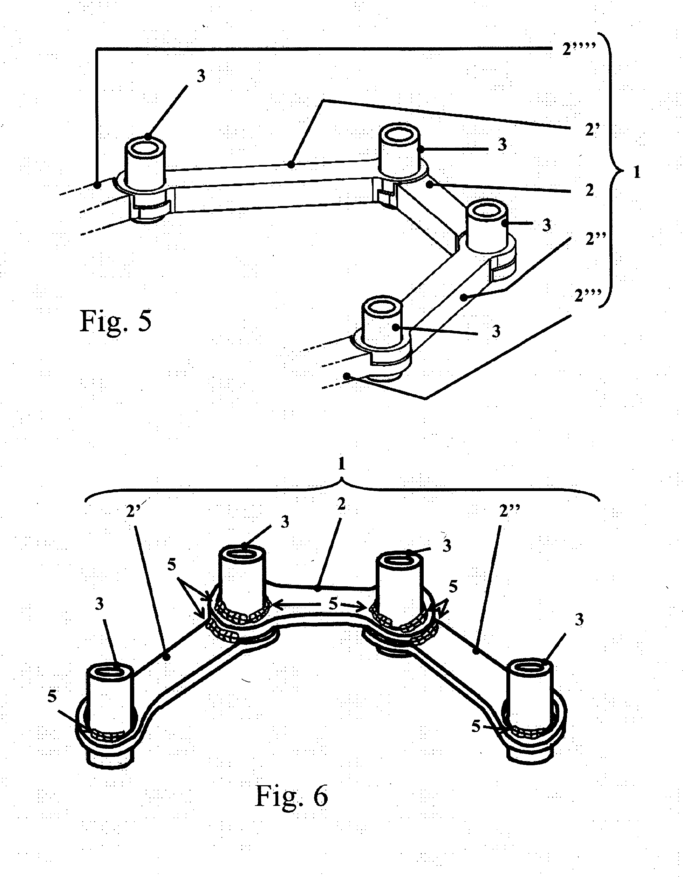

When the doctor ends the phases of positioning of the bars or connection elements (2, 2', 2", 2"', 2"") on the supports (3), he/she proceeds to the reciprocal fixing of the bars or connection elements (2, 2', 2", 2"', 2"") to one another and to the fixing of the bars or connection elements (2, 2', 2", 2'", 2"") on the supports (3), thus constituting (Fig. 5, Fig. 6) a rigid structure (1) that can be used both to transmit the information of positioning of the implants to the technician and to make the prosthesis. The reciprocal fixing of the bars or connection elements (2, 2', 2", 2"', 2"") and of the supports (3) can occur for example by means of fixing material (5) for example in the form of self-polymerizing resins, photo-polymerizing resins, two-part resins, or equivalent systems.

Afterwards, after completing the reciprocal bonding of the bars or connection elements (2, 2', 2", 2'", 2"") and of the supports (3), the doctor proceeds with the following phases that, given the rigidity of the structure (1) obtained, can occur in a very short time. In fact the rigidity of the structure (1) allows to proceed practically immediately to the measurement of the vertical dimension by means of suitable waxes or silicones interposed between said structure (1) and the antagonist arch with respect to the arch being worked. One will then proceed to the taking of the precision impression of the implants (7) that will be carried out thanks to a holed individual impression holder that will allow to cover the structure obtained with polyether or silicone and thus also to take the shape of the patient's tissues. This phase occurs with the insertion of further screws that will be inserted into an impression holder to take a complete impression of the dental arch or of the zone of interest. Following the removal of said further screws, the doctor will remove the structure (1) along with the impression of the dental arch or of the zone of interest.

From this impression the technician will obtain the positive plaster cast that constitutes the master model on the basis of which he/she will make the prosthesis, be it a temporary prosthesis or a permanent prosthesis. After completing the positive cast, the technician will extract from the impression the rigid structure (1) and will apply it to the master model to obtain (Fig. 10) a prosthesis (6), incorporating in the latter the rigid structure (1), which will act, by means of the supports (3), as a fixing interface on the implants (7).

To sum up, the method of the present invention for making a dental prosthesis (6) by means of the set of elements of the present invention, which are intended to be reciprocally assembled to constitute the structure (1) to be applied on the implants (7) installed on a dental arch (4), comprises the phases of:
a) providing a series of connection elements (2) and at least one pair of supports (3) that are supports adapted to couple with the implants (7) by means of screws;
b) applying at least one pair of supports (3) on corresponding implants (7) which are placed at a first distance with respect to each other;
c) possible adjustment in height of the supports (3) according to the available space in height within an oral cavity within which the implants (7) are installed;
d) for each pair of supports (3) that are reciprocally adjacent in the possible sequence of supports applied on the implants (7), selection of one or more of the connection elements (2) within the series of connection elements (2) in which the one or more selected connection elements (2) have a length essentially corresponding to the first distance between the implants (7), this phase of selection possibly occurring with the aid of a measuring system or a periodontal probe;
e) application of the one or more selected connection elements (2) on the supports (3) by means of at least one of the coupling members (9) which form an engagement interface between the connection element (2) and the corresponding support (3);
f) possible reciprocal fixing of the one or more selected connection elements (2) and the supports (3) by means of the fixing material (5). This phase can be present as an intermediate phase in the case in which it is necessary to operate on many pairs of implants (7) or can be absent in the case in which one applies all the elements of the set before proceeding to their fixing in the following phase l);
g) possible repetition of phases d) to f) until at least one of the selected connection elements (2) has been applied between all or part of the pairs of reciprocally adjacent supports (3). One can obviously provide that the method is realized in an independent way between a first pair of implants and a second pair of implants to obtain two separate and different prostheses;
h) possible application of one or two selected connection elements (2) which are overhanging connection elements (2) applied in correspondence with end supports (3) in the sequence of supports applied on said implants (7);
i) possible application of one or more additional connection elements (2) between one or more pairs of supports (3);
l) reciprocal fixing of the one or more selected connection elements (2) and of the supports (3) by means of the fixing material (5) obtaining the essentially rigid structure (1);
m) measurement of a vertical dimension available between the structure (1) and an antagonist arch with respect to the dental arch (4) on which the implants (7) are present obtaining a negative impression of the dental arch (4) incorporating the structure (1);
n) removal of the negative impression;
o) obtainment of a positive cast from the negative impression;
p) extraction of the structure (1) from the negative impression;
q) application of the structure (1) on the cast;
r) making of the prosthesis (6) on the cast with the incorporation of the structure (1) within the prosthesis, the structure (1) being adapted to constitute a fixing interface of the prosthesis (6) on the implants (7).

The so obtained prosthesis can be a temporary prosthesis but also a permanent prosthesis, since the presence of the rigid structure (1) within the prosthesis constitutes a reinforcing structure with a very precise coupling on the implants (7), such characteristics being adapted to provide characteristics comparable to those of a permanent prosthesis to the prosthesis made by the method of the present invention or incorporating the structure of the present invention.

The time for making the prosthesis is considerably reduced because the method, the rigidity of the structure (1) obtained and the absence of deformations or following adjustments allow to prevent further check phases between the doctor and the technician, allowing to obtain the prosthesis even in less than 24 hours. Advantageously, the incorporation of the rigid structure (1) within the prosthesis (6) allows to obtain a particularly robust prosthesis that, at worst, can be considered totally equivalent to a permanent prosthesis, with consequent advantages in terms of cost and of manufacturing time.
A just as important advantage of the method of the present invention is the possibility to use the bars or connection elements (2, 2', 2", 2"', 2"") and the supports (3) directly within the oral cavity to create splints for the taking of the impression and also to make splints for the control of the precision of the impression once the master model has been developed.
The possibility of having different sizes for the bars or connection elements (2, 2', 2", 2"', 2"") enables an easy and fast adaptation to the various shapes of implants (7) which can be made and that depend very much on the characteristics of the dental arch of the patient.

Furthermore, advantageously, one limits the amount of materials necessary for the making and the reciprocal fixing of the elements constituting the structure (1) to the advantage of precision, since one practically eliminates the risk of errors due to the intrinsic shrinkage of the materials normally used for this purpose, such as the resins, which, also after a first hardening, are subject to subsequent shrinkage that endangers or anyway reduces the precision of the operations.
Advantageously, the solution according to the present invention is applicable independently of the type of implant (7) used, being applicable to all the types of implant available on the market.
To sum up, the present invention relates (Fig. 1, Fig. 2, Fig. 3, Fig. 4, Fig. 5, Fig. 6, Fig. 7, Fig. 8, Fig. 9) to a set of elements intended to be reciprocally assembled and adapted to be reciprocally assembled together with at least two supports (3) which are supports (3) adapted to be applied on one or more implants (7) which are installed on a dental arch (4). The implants (7) and, as a consequence, also the supports (3) when they are in the condition applied on the implants (7), are arranged at a first distance with respect to each other. The set of elements assembled with the at least two supports (3) is intended to constitute a structure (1) which is intended to be installed on the one or more implants (7). The set comprises at least one connection element (2, 2', 2", 2"', 2"") selected from a series of connection elements (2, 2', 2", 2"', 2"") configured and structured with an oblong body (8) in correspondence with at least one first end of which a coupling member (9) is obtained, which is adapted to couple with one of said supports (3). In general the at least two supports (3) include at least one first support (3) and one second support (3) that are adapted to be installed on the implants (7), the supports preferably having an essentially cylindrical shape according to a plan view. The at least two supports (3) and the at least one connection element (2, 2', 2", 2"', 2"") are intended to be reciprocally fixed by means of a fixing material (5) constituting the structure (1) that is essentially rigid and adapted to be installed on the one or more implants (7). The so created essentially rigid structure (1) therefore comprises at least the at least two supports (3) in which the first support (3) is joined essentially rigidly to the second support (3) by means of the at least one connection element (2, 2', 2", 2"', 2"") selected from the series of connection elements (2, 2', 2", 2"', 2"").

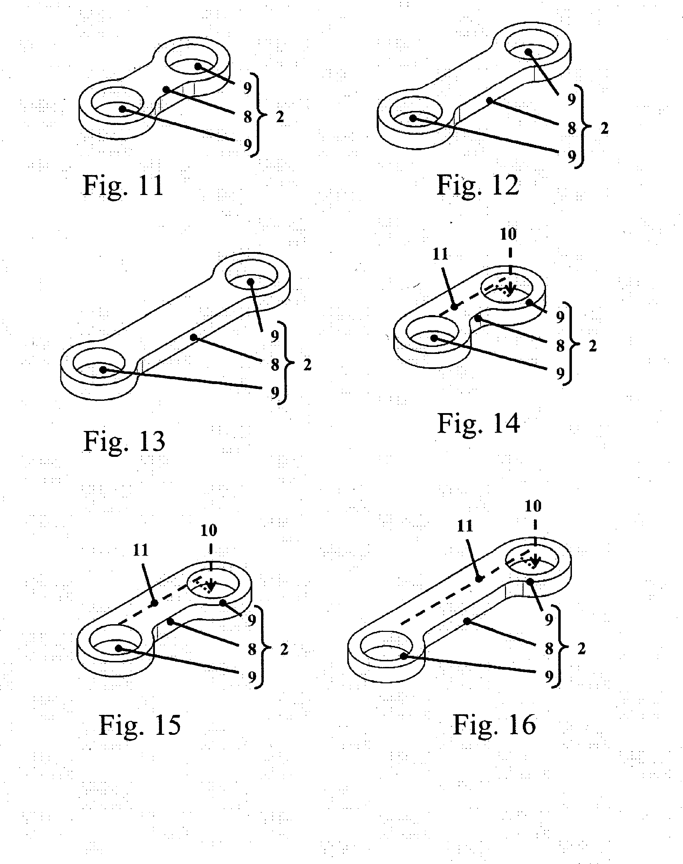

In some embodiments (Fig. 11, Fig. 12, Fig. 13, Fig. 14, Fig. 15, Fig. 16, Fig. 17, Fig. 18, Fig. 19, Fig. 20, Fig. 21, Fig. 22, Fig. 23, Fig. 24, Fig. 25, Fig. 26, Fig. 27, Fig. 28, Fig. 29, Fig. 30, Fig. 31, Fig. 32, Fig. 33, Fig. 34) the connection element (2, 2', 2", 21", 2"") includes a pair of coupling members (9) at opposite ends with respect to the body (8), that is to say, a first coupling member (9) at a first end and a second coupling member (9) at a second end which is opposite to the first end with respect to the body (8).

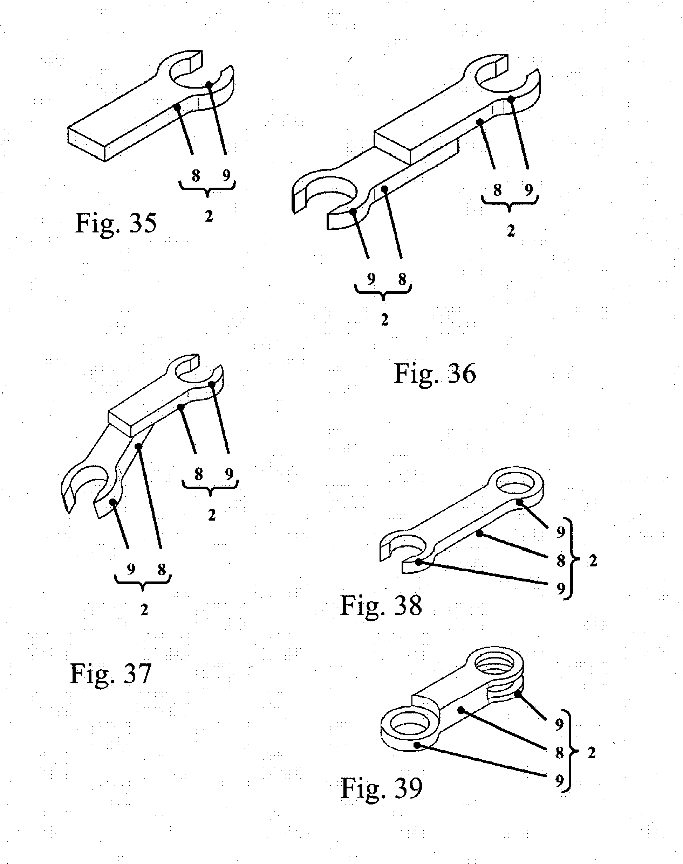

In other embodiments (Fig. 35, Fig. 36, Fig. 37) the connection element (2) includes only one coupling member (9) at the first end. This solution can be advantageous because it allows to obtain even greater adaptability of the set to the different configurations of implants which may be present. In fact, in this case (Fig. 36, Fig. 37) the essentially rigid structure (1) includes at least the first support (3), the second support (3) and a pair of connection elements (2) shaped with only one coupling member (9). The first support (3) and the second support (3) are reciprocally joined by means of the pair of connection elements (2) which are reciprocally fixed in a connection zone by means of the fixing material (5) according to an essentially reciprocally opposite configuration in which the body (8) of a first connection element (2) is fixed by means of the fixing material (5) to the body (8) of the second connection element (2) according to the essentially reciprocally opposite configuration with the coupling members (9) that protrude from opposite ends with respect to the connection zone of the pair of connection elements (2). In this way, by adjusting the width of the overlapping zone that constitutes the connection zone of the two connection elements (2), it is possible to adjust the reciprocal distance between the coupling members (9) according to the distance between the implants only selecting a pair of connection elements (2) of a length approximately corresponding to the distance between the implants without having to necessarily select one single connection element (2) having a length precisely adapted to the distance between the implants (7). This solution, however, has the disadvantage of requiring at least one partial overlapping of the connection elements (2), which may not always be possible if the available space in height is not sufficient.

As previously observed, the present invention provides a set of connection elements (2, 2', 2", 2"', 2"") including connection elements (2, 2', 2", 2"', 2"") which are shaped with a progressively rising length of the body (8) from a minimum length to a maximum length, so that the structure (1) will include at least one first support (3), one second support (3) and at least one connection element (2, 2', 2", 2"', 2"") selected from the series of connection elements (2, 2', 2", 2"', 2"") and having a length of the body (8) essentially corresponding to the previously defined first distance between the first support (3) and the second support (3). In this way, according to the described method of operation, the doctor will only select from the series of connection elements (2, 2', 2", 2"', 2"") a specific connection element (2, 2', 2", 2"', 2"") having a longitudinal development of a length corresponding to the distance between the implants (7) between which he/she must create the connection for the corresponding supports (3). The bars or connection elements (2, 2', 2", 2"', 2"") can be made (Figures 11 to 37) according to different sizes and shapes that will be described in the following of the present description.

In some embodiments the bars or connection elements (2, 2', 2", 2"', 2"") include (Fig. 11, Fig. 12, Fig. 13, Fig. 14, Fig. 15, Fig. 16, Fig. 17, Fig. 18, Fig. 19, Fig. 20, Fig. 21, Fig. 22, Fig. 23, Fig. 24, Fig. 25, Fig. 26, Fig. 27, Fig. 28) a coupling member (9) which is configured and structured in the form of a hole obtained in correspondence with at least one first end of the body (8). The diameter of the hole is essentially corresponding and greater than the section size of the support (3), that, in case of supports with a cylindrical plan shape, will have to be considered as equal to the diameter of the cylindrical shape itself. In this way, the structure (1) will include (Fig. 4, Fig. 5, Fig. 6) at least one first support (3) and one second support (3) reciprocally joined by means of at least one connection element (2, 2', 2", 2"', 2"") according to a configuration in which at least one of the supports (3) is inserted into the hole and fixed in correspondence with it by means of the fixing material (5).

As an alternative to the configuration with a circular hole it will be possible (solution not shown) to also provide a coupling member (9) configured and structured in the form of an eyelet obtained in correspondence with at least one first end of the body (8). The size of the eyelet will be essentially corresponding and greater than the section size of the support (3). In that case the structure (1) will include at least the first support (3) and the second support (3) reciprocally joined by means of at least one connection element (2, 2', 2", 2"', 2"") according to a configuration in which at least one of the supports (3) is inserted into the eyelet and fixed in correspondence with it by means of the fixing material (5).

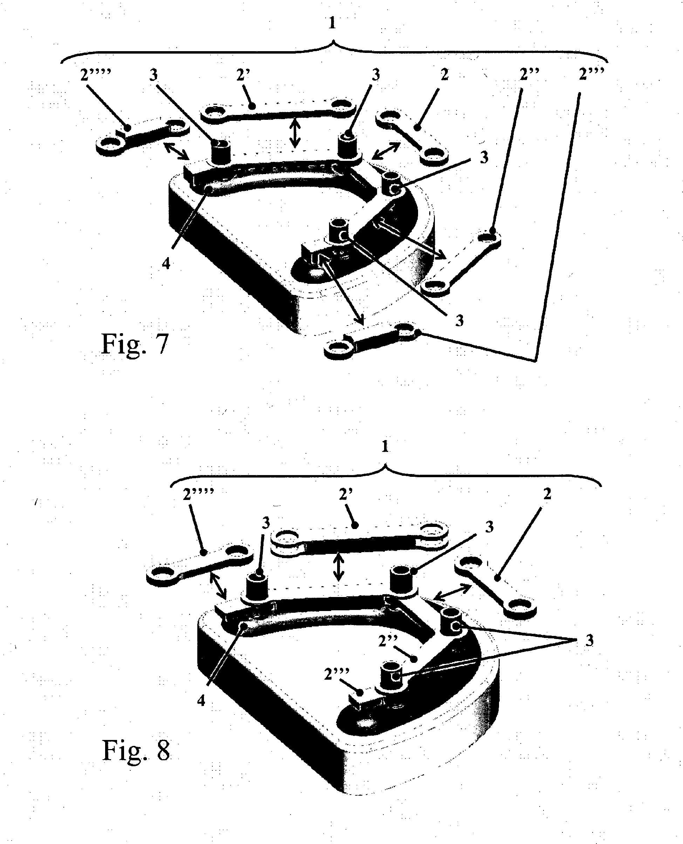

In some embodiments (Fig. 14, Fig. 15, Fig. 16) the centre (10) of the hole is placed in a misaligned position with respect to an axis (11) of longitudinal development of the body (8). In this way the body (8) includes a recessed zone with respect to the encumbrance of the coupling members (9), which can be particularly useful (Fig. 7) for example in the case of a connection element (2, 2', 2", 2'", 2"") mounted in a central position with respect to the development of the dental arch that can be concerned by the patient's tongue. By means of this configuration it will thus be possible to obtain (Fig. 10) a prosthesis (6) with a corresponding recess in the region concerned by the tongue. This embodiment will be applicable also in the case of an eyelet-shaped coupling member (9).

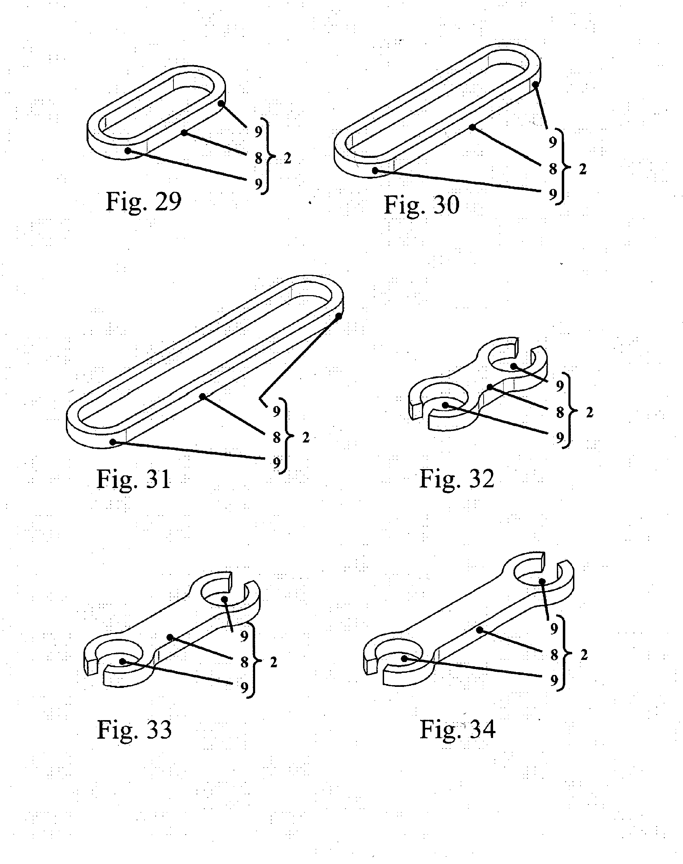

In some embodiments (Fig. 32, Fig. 33, Fig. 34, Fig. 35, Fig. 36, Fig. 37) the coupling member (9) is configured and structured according to an essentially "C" or "U" shaped configuration in which the arms of the "C" or "U" shaped configurations are intended to at least partially encircle one of the supports (3). This solution has the advantage of enabling an easier insertion of the connection element (2, 2', 2", 2"', 2"") between the supports when these are mounted on the respective implants, particularly in positions inside the mouth that are harder to reach or in case of misalignments with respect to the essentially vertical direction of two reciprocally adjacent supports.

In some embodiments (Fig. 29, Fig. 30, Fig. 31) the connection element (2, 2', 2", 2"', 2"") is configured and structured in the form of an oblong shaped ring consisting of two essentially parallel sides reciprocally joined in correspondence with respective ends by means of an essentially circular joint having a bending radius essentially corresponding and greater than the section size of the support (3). In this case it is the essentially circular joint that constitutes the coupling member (9) that encircles a portion of one of the supports (3) according to a configuration in which the oblong ring encircles (Fig. 9) between its ends two supports (3) adjacent along the development of the dental arch.

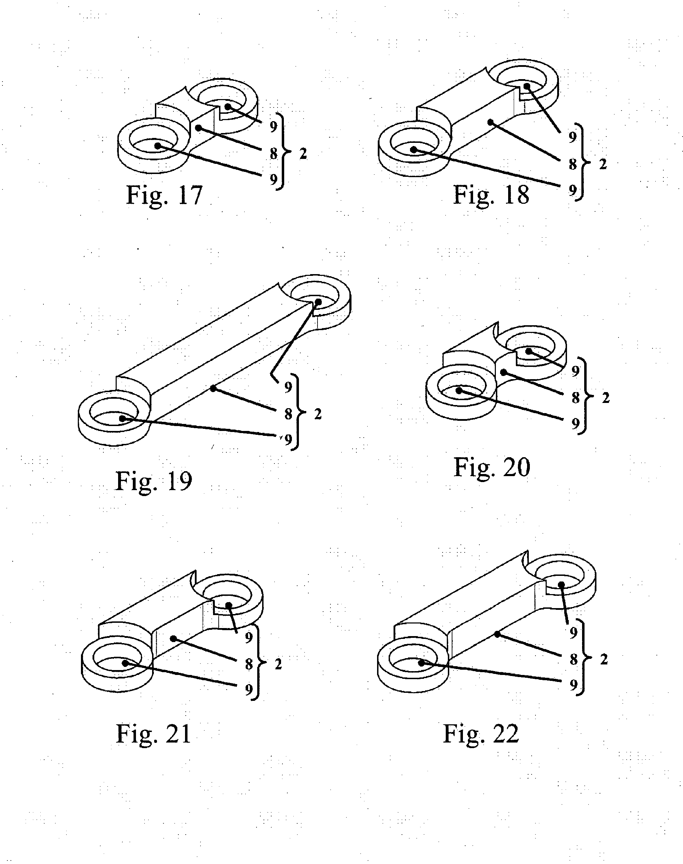

In some embodiments (Fig. 17, Fig. 18, Fig. 19, Fig. 20, Fig. 21, Fig. 22) the body (8) of the connection element (2, 2', 2", 2"', 2"") has a greater thickness with respect to the thickness of the coupling member (9). This greater thickness of the body (8) defines a step intended to define a seat adapted to accommodate an additional coupling member (9) of an additional connection element (2, 2', 2", 2"', 2"") pertaining (Fig. 1, Fig. 2, Fig. 3, Fig. 4, Fig. 5, Fig. 6) to the same support (3).

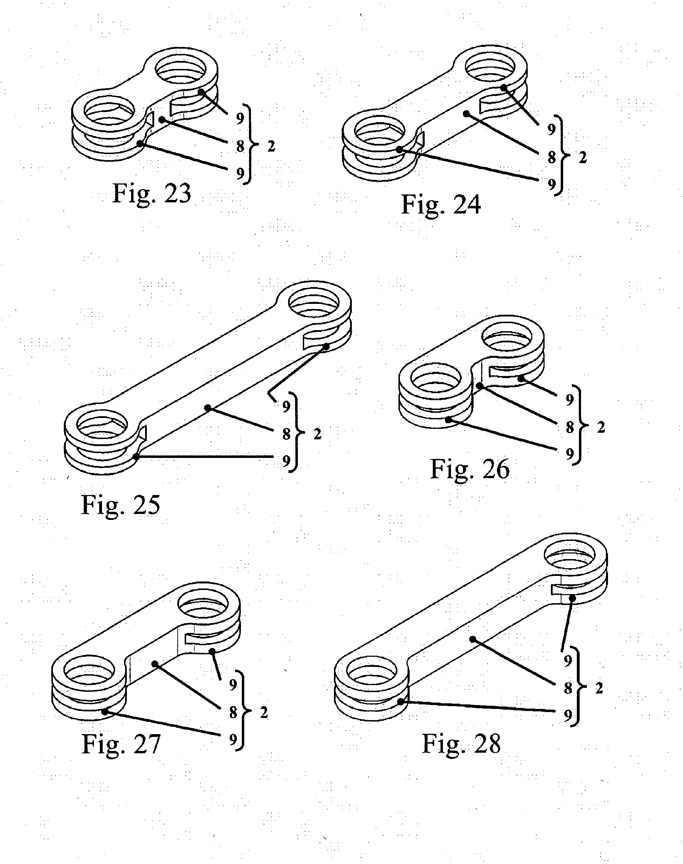

In some embodiments (Fig. 23, Fig. 24, Fig. 25, Fig. 26, Fig. 27, Fig. 28) the connection element (2, 2', 2", 2"', 2"") includes a pair of coupling members (9) in correspondence with at least one first end. The coupling members (9) of said pair are reciprocally parallel and spaced apart defining an intermediate gap delimited by the pair of coupling members (9). The intermediate gap constitutes a space adapted (Fig. 8) for the insertion of the first end of an additional connection element (2, 2', 2", 2"', 2""). In this way the coupling member (9) of said additional connection element (2, 2', 2", 2'", 2""), which will be preferably configured with only one coupling member (9), can enter the intermediate gap before the application of the connection elements on the corresponding support (3) common to the two connection elements (2, 2', 2", 2"', 2""), contributing to creating a more rigid structure (1) after the application of the fixing material and at the same time allowing to obtain a structure (1) that is more adaptable during the operations of application of the connection elements (2, 2', 2", 2"', 2"") on the supports and before the application of the fixing material to reciprocally constrain to one another the various elements of the set.

In alternative embodiments one can provide (Fig. 38, Fig. 39) connection elements (2, 2', 2", 2"', 2"") including pairs of different coupling members (9) in correspondence with the respective opposite ends in which the coupling members (9) can be chosen at least from those represented in the various possible variants described.

The set of the present invention, therefore, allows to make (Fig. 4, Fig. 5, Fig. 6, Fig. 7, Fig. 8, Fig. 9, Fig. 10) a structure (1) that is adapted to be installed on one or more implants (7) installed on a dental arch (4), said structure (1) being adapted to be incorporated within a dental prosthesis (6) in which the structure (1) is made up of at least one pair of supports (3) and of a group of elements selected from the set of described elements, that is to say, from the series of connection elements (2, 2', 2", 2"', 2""), and of the supports (3), which are intended to be reciprocally assembled by means of the fixing material (5). As previously observed, the structure (1) can comprise at least one section of connection between two of the supports (3), which is a section of connection obtained by overlapping two connection elements (2, 2', 2", 2"', 2""), in order to obtain a greater overall rigidity of the structure (1) at least in the oral zones where a greater space in height is available.

The set of the present invention will thus be made up of at least one series of connection elements (2, 2', 2", 2"', 2"") made according to one or more of the embodiments described and provided in different lengths of the body (8) for the purpose of allowing the doctor to locate, within said series of connection elements, one or more specific connection elements (2, 2', 2", 2"', 2"") selected from said series in which said specific connection elements (2, 2', 2", 2"', 2"") have a length of the body (8) such as to enable an easy mounting of the specific connection elements (2, 2', 2", 2"', 2"") on the supports (3) when the supports (3) are in a condition of mounting on the implants (7). If necessary, the set of the present invention can also comprise specific supports (3) structured and configured to couple with the connection elements (2, 2', 2", 2"', 2"") and in particular with the coupling members (9) of the latter. If necessary, the set of the present invention can also comprise specific implants (7) intended for the application of supports (3) structured and configured to couple with the connection elements (2, 2', 2", 2"', 2"") and in particular with the coupling members (9) of the latter.

The description of the present invention has been made with reference to the enclosed figures in a preferred embodiment, but it is evident that many possible changes, modifications and variations will be immediately clear to those skilled in the art in the light of the previous description. Thus, it must be underlined that the invention is not limited to the previous description, but includes all the changes, modifications and variations in accordance with the appended claims.

### Nomenclature used

With reference to the identification numbers in the enclosed figures, the following nomenclature has been used:
1. Structure
2, 2', 2", 2"', 2"". Connection element or bar
3. Support
4. Dental arch
5. Fixing material
6. Prosthesis
7. Implant
8. Body
9. Coupling member
10. Centre
11. Axis

## Claims

1. Set of elements intended to be reciprocally assembled and adapted to be reciprocally assembled together with at least two supports (3) which are supports (3) adapted to be applied on one or more implants (7) which are installed on a dental arch (4) and which are placed at a first distance from one another, said set of elements assembled with said at least two supports (3) being adapted to constitute a structure (1) intended to be installed on said one or more implants (7), **characterised in that** said set includes at least one connection element (2, 2', 2", 2"', 2"") selected from a series of connection elements (2, 2', 2", 2"', 2"") configured and structured with an oblong body (8) in correspondence with at least one first end of which a coupling member (9) is obtained which is intended to couple with one of said supports (3), said at least two supports (3) including at least one first support (3) and one second support (3) adapted to be installed on said implants (7), said at least two supports (3) and said at least one connection element (2, 2', 2", 2"', 2"") being intended to be reciprocally fixed by means of a fixing material (5) constituting said structure (1) which is essentially rigid and adapted to be installed on said one or more implants (7), said essentially rigid structure (1) at least comprising said at least two supports (3) in which said first support (3) is essentially rigidly joined to said second support (3) by means of said at least one connection element (2, 2', 2", 2"', 2"") selected from said series of connection elements (2, 2', 2", 2"', 2"").

2. Set of elements intended to be reciprocally assembled according to the previous claim, **characterised in that** said connection element (2, 2', 2", 2"', 2"") includes a pair of said coupling members (9) in correspondence with opposite ends of said body (8), namely a first coupling member (9) in correspondence with said first end and a second coupling member (9) in correspondence with a second end which is opposite to said first end with respect to said body (8).

3. Set of elements intended to be reciprocally assembled according to claim 1, **characterised in that** said connection element (2) includes only a single one of said coupling members (9) in correspondence with said first end, said essentially rigid structure (1) at least comprising said first support (3), said second support (3) and a pair of said connection elements (2) shaped with said single coupling member (9), said first support (3) and said second support (3) being reciprocally joined by means of said pair of connection elements (2) which are reciprocally fixed in a connection zone by means of said fixing material (5) according to an essentially reciprocally opposite configuration in which the body (8) of a first connection element (2) is fixed by means of said fixing material (5) to the body (8) of a second connection element (2) according to said essentially reciprocally opposite configuration with the coupling members (9) which protrude from opposite ends with respect to said connection zone of said pair of connection elements (2).

4. Set of elements intended to be reciprocally assembled according to any of the previous claims, **characterised in that** said series of connection elements (2, 2', 2", 2"', 2"") comprises connection elements (2, 2', 2", 2"', 2"") which are shaped with a length of said body (8) progressively rising from a minimum length to a maximum length, said structure (1) at least comprising said first support (3), said second support (3) and at least one connection element (2, 2', 2", 2"', 2"") selected from said series of connection elements (2, 2', 2", 2"', 2"") and having a length of said body (2, 2', 2", 2"', 2"") essentially corresponding to said first distance between said first support (3) and said second support (3).

5. Set of elements intended to be reciprocally assembled according to any of the previous claims, **characterised in that** at least one of said coupling members (9) is configured and structured in the form of a hole in correspondence with at least said first end of said body (8), the diameter of said hole being essentially corresponding and greater than the section size of said support (3), said structure (1) at least comprising said first support (3) and said second support (3) reciprocally joined by means of said at least one connection element (2, 2', 2", 2"', 2"") according to a configuration in which at least one of said supports (3) is inserted into said hole and fixed in correspondence with it by means of said fixing material (5).

6. Set of elements intended to be reciprocally assembled according to any of the previous claims 1 to 4, **characterised in that** at least one of said coupling members (9) is configured and structured in the form of an eyelet obtained in correspondence with at least said first end of said body (8), the size of said eyelet being essentially corresponding and greater than the section size of said support (3), said structure (1) at least comprising said first support (3) and said second support (3) reciprocally joined by means of said at least one connection element (2, 2', 2", 2"', 2"") according to a configuration in which at least one of said supports (3) is inserted into said eyelet and fixed in correspondence with it by means of said fixing material (5).

7. Set of elements intended to be reciprocally assembled according to any of the previous claims 5 to 6, **characterised in that** the centre (10) of said hole or eyelet is placed in a misaligned position with respect to an axis (11) of longitudinal development of said body (8).

8. Set of elements intended to be reciprocally assembled according to any of the previous claims 1 to 4, **characterised in that** at least one of said coupling members (9) is configured and structured according to an essentially "C" or "U" shaped configuration in which the arms of said "C" or "U" shaped configuration are intended to at least partially encircle one of said supports (3).

9. Set of elements intended to be reciprocally assembled according to any of the previous claims 1 to 4, **characterised in that** at least one of said connection elements (2, 2', 2", 2'", 2"") is configured and structured in the form of an oblong shaped ring consisting of two essentially parallel sides reciprocally joined in correspondence with respective ends by means of an essentially circular joint having a bending radius essentially corresponding and greater than the section size of said support (3), said essentially circular joint constituting said coupling member (9).

10. Set of elements intended to be reciprocally assembled according to any of the previous claims, **characterised in that** the body (8) of at least one of said connection elements (2, 2', 2", 2"', 2"") has a thickness which is greater with respect to the thickness of said coupling member (9), said greater thickness of said body (8) defining a step intended to define a seat adapted to accommodate an additional coupling member (9) of an additional one of said connection elements (2, 2', 2", 2"', 2"") pertaining to the same support (3).

11. Set of elements intended to be reciprocally assembled according to any of the previous claims, **characterised in that** at least one of said connection elements (2, 2', 2", 2"', 2"") includes a pair of said coupling members (9) in correspondence with at least said first end, said coupling members (9) of said pair being reciprocally parallel and spaced apart defining an intermediate gap delimited by said pair of said coupling members (9) which is a space adapted for the insertion of the first end of an additional one of said connection elements (2, 2', 2", 2"', 2"").

12. Set of elements intended to be reciprocally assembled according to any of the previous claims, **characterised in that** the body of said connection element (2, 2', 2", 2"', 2"") has a thickness in a range of 1 mm to 5 mm.

13. Set of elements intended to be reciprocally assembled according to any of the previous claims, **characterised in that** the length of said connection element (2, 2', 2", 2"', 2"") is in a range of 6 mm to 30 mm.

14. Set of elements intended to be reciprocally assembled according to any of the previous claims, **characterised in that** said connection element (2, 2', 2", 2"', 2"") is made of an essentially rigid material.

15. Set of elements intended to be reciprocally assembled according to any of the previous claims, **characterised in that** said connection element (2, 2', 2", 2"', 2"") is made of a material selected from the group consisting of stainless steel, titanium, carbon or carbon fibre, biocompatible material.

16. Structure (1) adapted to be installed on one or more implants (7) which are installed on a dental arch (4), said structure (1) being adapted to be incorporated within a dental prosthesis (6), **characterised in that** said structure (1) consists of at least one pair of said supports (3) and of a group of elements selected from said set of elements intended to be reciprocally assembled by means of said fixing material (5) in which said set of elements is a set of elements according to any of the previous claims.

17. Structure (1) adapted to be installed on one or more implants (7) which are installed on a dental arch (4) according to the previous claim, **characterised in that** said structure (1) comprises at least one connection portion between two of said supports (3) which is a connection portion made by overlapping two of said connection elements (2, 2', 2", 2"', 2"").

18. Method for making a dental prosthesis (6) by means of said set of elements intended to be reciprocally assembled to constitute said structure (1) adapted to be installed on one or more implants (7) which are installed on a dental arch (4), wherein said set of elements is made according to any of the previous claims 1 to 15, said method comprising the steps of:
a) providing said series of connection elements (2, 2', 2", 2"', 2"") and at least one pair of said supports (3);
b) applying at least said pair of supports (3) on corresponding implants (7) which are placed at a first distance from one another;
c) possible adjustment in height of said supports (3) depending on the available space in height within an oral cavity within which said implants (7) are installed;
d) for each pair of supports (3) which are reciprocally adjacent in a possible sequence of supports applied on said implants (7), selection of one or more of said connection elements (2, 2', 2", 2"', 2"") from said series of connection elements (2, 2', 2", 2"', 2"") in which said one or more selected connection elements (2, 2', 2", 2"', 2"") have a length essentially corresponding to said first distance between said implants (7), said phase of selection possibly occurring with the aid of a measuring system or a periodontal probe;
e) application of said one or more selected connection elements (2, 2', 2", 2"', 2"") on said supports (3) by means of at least one of said coupling members (9) which form an engagement interface between said connection element (2, 2', 2", 2"', 2"") and said support (3);
f) possible reciprocal fixing of said one or more selected connection elements (2, 2', 2", 2"', 2"") and said supports (3) by means of said fixing material (5);
g) possible repetition of phases d) to f) until at least one of said selected connection elements (2, 2', 2", 2"', 2"") has been applied between all or part of the pairs of reciprocally adjacent supports (3);
h) possible application of one or two selected connection elements (2, 2', 2", 2"', 2"") which are overhanging connection elements (2, 2', 2", 2"', 2"") applied in correspondence with end supports (3) in the sequence of supports applied on said implants (7);
i) possible application of one or more additional connection elements (2, 2', 2", 2"', 2"") between one or more pairs of said supports (3);
l) reciprocal fixing of said one or more selected connection elements (2, 2', 2", 2"', 2"") and said supports (3) by means of said fixing material (5) obtaining said essentially rigid structure (1);
m) measurement of a vertical dimension available between said structure (1) and an antagonist arch with respect to said dental arch (4) on which said implants (7) are present obtaining a negative impression of said dental arch (4) incorporating said structure (1);
n) removal of said negative impression;
o) obtainment of a positive cast from said negative impression;
p) extraction of said structure (1) from said negative impression;
q) application of said structure (1) on said cast;
r) making of said prosthesis (6) on said cast with the incorporation of said structure (1) within said prosthesis, said structure (1) being adapted to constitute a fixing interface of said prosthesis (6) on said implants (7).

19. Dental prosthesis (6) of the type comprising connection means with one or more implants (7) installed on a dental arch (4), **characterised in that** said prosthesis (6) incorporates a structure (1) consisting of a group of elements selected from said set of elements intended to be reciprocally assembled by means of said fixing material (5) in which said set of elements is a set of elements according to any of the previous claims 1 to 15.

20. Dental prosthesis (6) of the type comprising connection means with one or more implants (7) installed on a dental arch (4) according to the previous claim, **characterised in that** said prosthesis (6) is obtained by means of the method according to claim 18.

## Amended claims

### Amended claims in accordance with Rule 137(2) EPC.

1. Set of reciprocally assemblable elements adapted to be reciprocally assembled together with at least two supports (3) which are supports (3) adapted to be applied on one or more implants (7) and which are placed at a first distance from one another, said set of elements assembled with said at least two supports (3) being adapted to constitute a structure (1) adapted to be installed on said one or more implants (7), in which said set includes at least one connection element (2, 2', 2", 2"', 2"") selected from a series of connection elements (2, 2', 2", 2"', 2"") configured and structured with an oblong body (8) in correspondence with at least one first end of which a coupling member (9) is obtained which is coupleable with one of said supports (3), said at least two supports (3) including at least one first support (3) and one second support (3) adapted to be installed on said implants (7), said at least two supports (3) and said at least one connection element (2, 2', 2", 2"', 2"") being reciprocally fixable by means of a fixing material (5) constituting said structure (1) which is essentially rigid and adapted to be installed on said one or more implants (7), said essentially rigid structure (1) at least comprising said at least two supports (3) in which said first support (3) is essentially rigidly joined to said second support (3) by means of said at least one connection element (2, 2', 2", 2"', 2"") selected from said series of connection elements (2, 2', 2", 2"', 2"") in which
said connection element (2, 2', 2", 2"', 2"") includes a pair of said coupling members (9) in correspondence with opposite ends of said body (8), namely a first coupling member (9) in correspondence with said first end and a second coupling member (9) in correspondence with a second end which is opposite to said first end with respect to said body (8)
**characterised in that** said series of connection elements (2, 2', 2", 2"', 2"") comprises connection elements (2, 2', 2", 2"', 2"") which are shaped with a length of said body (8) progressively rising from a minimum length to a maximum length, said structure (1) at least comprising said first support (3), said second support (3) and at least one connection element (2, 2', 2", 2"', 2"") selected from said series of connection elements (2, 2', 2", 2"', 2"") and having a length of said body (8) essentially corresponding to said first distance between said first support (3) and said second support (3), the coupling members (9) being configured and structured according to a shape in which the coupling member (9) at least partially encircles one of the supports (3).

2. Set of reciprocally assemblable elements according to the previous claims, **characterised in that** at least one of said coupling members (9) is configured and structured in the form of a hole in correspondence with at least said first end of said body (8), the diameter of said hole being essentially corresponding and greater than the section size of said support (3), said structure (1) at least comprising said first support (3) and said second support (3) reciprocally joined by means of said at least one connection element (2, 2', 2", 2"', 2"") according to a configuration in which
at least one of said supports (3) is inserted into said hole and fixed in correspondence with it by means of said fixing material (5).

3. Set of reciprocally assemblable elements according to claim 1, **characterised in that** at least one of said coupling members (9) is configured and structured in the form of an eyelet obtained in correspondence with at least said first end of said body (8), the size of said eyelet being essentially corresponding and greater than the section size of said support (3), said structure (1) at least comprising said first support (3) and said second support (3) reciprocally joined by means of said at least one connection element (2, 2', 2", 2"', 2"") according to a configuration in which at least one of said supports (3) is inserted into said eyelet and fixed in correspondence with it by means of said fixing material (5).

4. Set of reciprocally assemblable elements according to any of the previous claims 2 to 3, **characterised in that** the centre (10) of said hole or eyelet is placed in a misaligned position with respect to an axis (11) of longitudinal development of said body (8).

5. Set of reciprocally assemblable elements according to claim 1, **characterised in that** at least one of said coupling members (9) is configured and structured according to an essentially "C" or "U" shaped configuration in which the arms of said "C" or "U" shaped configuration are adapted to at least partially encircle one of said supports (3).

6. Set of reciprocally assemblable elements according to claim 1, **characterised in that** at least one of said connection elements (2, 2', 2", 2"', 2"") is configured and structured in the form of an oblong shaped ring consisting of two essentially parallel sides reciprocally joined in correspondence with respective ends by means of an essentially circular joint having a bending radius essentially corresponding and greater than the section size of said support (3), said essentially circular joint constituting said coupling member (9).

7. Set of reciprocally assemblable elements according to any of the previous claims, **characterised in that** the body (8) of at least one of said connection elements (2, 2', 2", 2"', 2"") has a thickness which is greater with respect to the thickness of said coupling member (9), said greater thickness of said body (8) defining a step which defines a seat adapted to accommodate an additional coupling member (9) of an additional one of said connection elements (2, 2', 2", 2"', 2"") pertaining to the same support (3).

8. Set of reciprocally assemblable elements according to any of the previous claims, **characterised in that** at least one of said connection elements (2, 2', 2", 2"', 2"") includes a pair of said coupling members (9) in correspondence with at least said first end, said coupling members (9) of said pair being reciprocally parallel and spaced apart defining an intermediate gap delimited by said pair of said coupling members (9) which is a space adapted for the insertion of the first end of an additional one of said connection elements (2, 2', 2", 2"', 2"").

9. Set of reciprocally assemblable elements according to any of the previous claims, **characterised in that** the body of said connection element (2, 2', 2", 2"', 2"") has a thickness in a range of 1 mm to 5 mm.

10. Set of reciprocally assemblable elements according to any of the previous claims, **characterised in that** the length of said connection element (2, 2', 2", 2"', 2"") is in a range of 6 mm to 30 mm.

11. Set of reciprocally assemblable elements according to any of the previous claims, **characterised in that** said connection element (2, 2', 2", 2"', 2"") is made of an essentially rigid material.

12. Set of reciprocally assemblable elements according to any of the previous claims, **characterised in that** said connection element (2, 2', 2", 2"', 2"") is made of a material selected from the group consisting of stainless steel, titanium, carbon or carbon fibre, biocompatible material.

13. Structure (1) adapted to be installed on one or more implants (7), said structure (1) being adapted to be incorporated within a dental prosthesis (6), in which said structure (1) consists of at least one pair of supports (3) and of a group of elements selected from a set of elements which are adapted to be reciprocally assembled by means of a fixing material (5) in which said set of elements is a set of reciprocally assemblable elements adapted to be reciprocally assembled together with at least two supports (3) which are supports (3) adapted to be applied on one or more implants (7) and which are placed at a first distance from one another, said set of elements assembled with said at least two supports (3) being adapted to constitute a structure (1) adapted to be installed on said one or more implants (7), in which said set includes at least one connection element (2, 2', 2", 2"', 2"") selected from a series of connection elements (2, 2', 2", 2"', 2"") configured and structured with an oblong body (8) in correspondence with at least one first end of which a coupling member (9) is obtained which is coupleable with one of said supports (3), said at least two supports (3) including at least one first support (3) and one second support (3) adapted to be installed on said implants (7), said at least two supports (3) and said at least one connection element (2, 2', 2", 2"', 2"") being reciprocally fixable by means of a fixing material (5) constituting said structure (1) which is essentially rigid and adapted to be installed on said one or more implants (7), said essentially rigid structure (1) at least comprising said at least two supports (3) in which said first support (3) is essentially rigidly joined to said second support (3) by means of said at least one connection element (2, 2', 2", 2"', 2"") selected from said series of connection elements (2, 2', 2", 2"', 2"") in which said connection element (2, 2', 2", 2"', 2"") includes a pair of said coupling members (9) in correspondence with opposite ends of said body (8), namely a first coupling member (9) in correspondence with said first end and a second coupling member (9) in correspondence with a second end which is opposite to said first end with respect to said body (8) **characterised in that** said series of connection elements (2, 2', 2", 2"', 2"") comprises connection elements (2, 2', 2", 2"', 2"") which are shaped with a length of said body (8) progressively rising from a minimum length to a maximum length, said structure (1) at least comprising said first support (3), said second support (3) and at least one connection element (2, 2', 2", 2"', 2"") selected from said series of connection elements (2, 2', 2", 2"', 2"") and having a length of said body (8) essentially corresponding to said first distance between said first support (3) and said second support (3), the coupling members (9) being configured and structured according to a shape in which the coupling member (9) at least partially encircles one of the supports (3).

14. Structure (1) adapted to be installed on one or more implants (7) according to the previous claim, **characterised in that** said structure (1) comprises at least one connection portion between two of said supports (3) which is a connection portion made by overlapping two of said connection elements (2, 2', 2", 2"', 2"").

15. Method for making a dental prosthesis (6) by means of a set of reciprocally assemblable elements to constitute a structure (1) adapted to be installed on one or more implants (7) wherein said set of reciprocally assemblable elements is made according to any of the previous claims 1 to 12, said method comprising the steps of:
a) providing a series of connection elements (2, 2', 2", 2"', 2"") and at least one pair of supports (3), in which said connection elements (2, 2', 2", 2"', 2"") are configured and structured with an oblong body (8) in correspondence with at least one first end of which a coupling member (9) is obtained which is coupleable with one of said supports (3);
b) applying at least said pair of supports (3) on corresponding implants (7) which are placed at a first distance from one another;
c) possible adjustment in height of said supports (3) depending on the available space in height within an oral cavity within which said implants (7) are installed;
d) for each pair of supports (3) which are reciprocally adjacent in a possible sequence of supports applied on said implants (7), a selection phase of one or more of said connection elements (2, 2', 2", 2"', 2"") from said series of connection elements (2, 2', 2", 2"', 2"") in which said one or more selected connection elements (2, 2', 2", 2"', 2"") have a length essentially corresponding to said first distance between said implants (7), said selection phase possibly occurring with the aid of a measuring system or a periodontal probe;
e) application of said one or more selected connection elements (2, 2', 2", 2"', 2"") on said supports (3) by means of at least one of said coupling members (9) which form an engagement interface between said connection element (2, 2', 2", 2"', 2"") and said support (3);
f) possible reciprocal fixing of said one or more selected connection elements (2, 2', 2", 2"', 2"") and said supports (3) by means of a fixing material (5);
g) possible repetition of phases d) to f) until at least one of said selected connection elements (2, 2', 2", 2"', 2"") has been applied between all or part of the pairs of reciprocally adjacent supports (3);
h) possible application of one or two selected connection elements (2, 2', 2", 2"', 2"") which are overhanging connection elements (2, 2', 2", 2"', 2"") applied in correspondence with end supports (3) in the sequence of supports applied on said implants (7);
i) possible application of one or more additional connection elements (2, 2', 2", 2"', 2"") between one or more pairs of said supports (3);
l) reciprocal fixing of said one or more selected connection elements (2, 2', 2", 2"', 2"") and said supports (3) by means of said fixing material (5) obtaining said essentially rigid structure (1);
m) measurement of a vertical dimension available between said structure (1) and an antagonist arch with respect to said dental arch (4) on which said implants (7) are present obtaining a negative impression of said dental arch (4) incorporating said structure (1);
n) removal of said negative impression;
o) obtainment of a positive cast from said negative impression;
p) extraction of said structure (1) from said negative impression;
q) application of said structure (1) on said cast;
r) making of said prosthesis (6) on said cast with the incorporation of said structure (1) within said prosthesis, said structure (1) being adapted to constitute a fixing interface of said prosthesis (6) on said implants (7).

16. Dental prosthesis (6) of the type comprising connection means with one or more implants (7), in which said prosthesis (6) incorporates a structure (1) consisting of a group of elements selected from a set of elements reciprocally assemblable by means of a fixing material (5) in which said set of elements is a set of reciprocally assemblable elements adapted to be reciprocally assembled together with at least two supports (3) which are supports (3) adapted to be applied on one or more implants (7) and which are placed at a first distance from one another, said set of elements assembled with said at least two supports (3) being adapted to constitute a structure (1) adapted to be installed on said one or more implants (7), in which said set includes at least one connection element (2, 2', 2", 2"', 2"") selected from a series of connection elements (2, 2', 2", 2"', 2"") configured and structured with an oblong body (8) in correspondence with at least one first end of which a coupling member (9) is obtained which is coupleable with one of said supports (3), said at least two supports (3) including at least one first support (3) and one second support (3) adapted to be installed on said implants (7), said at least two supports (3) and said at least one connection element (2, 2', 2", 2"', 2"") being reciprocally fixable by means of a fixing material (5) constituting said structure (1) which is essentially rigid and adapted to be installed on said one or more implants (7), said essentially rigid structure (1) at least comprising said at least two supports (3) in which said first support (3) is essentially rigidly joined to said second support (3) by means of said at least one connection element (2, 2', 2", 2"', 2"") selected from said series of connection elements (2, 2', 2", 2"', 2"") in which said connection element (2, 2', 2", 2"', 2"") includes a pair of said coupling members (9) in correspondence with opposite ends of said body (8), namely a first coupling member (9) in correspondence with said first end and a second coupling member (9) in correspondence with a second end which is opposite to said first end with respect to said body (8) **characterised in that** said series of connection elements (2, 2', 2", 2"', 2"") comprises connection elements (2, 2', 2", 2"', 2"") which are shaped with a length of said body (8) progressively rising from a minimum length to a maximum length, said structure (1) at least comprising said first support (3), said second support (3) and at least one connection element (2, 2', 2", 2"', 2"") selected from said series of connection elements (2, 2', 2", 2"', 2"") and having a length of said body (8) essentially corresponding to said first distance between said first support (3) and said second support (3), the coupling members (9) being configured and structured according to a shape in which the coupling member (9) at least partially encircles one of the supports (3).

17. Dental prosthesis (6) of the type comprising connection means with one or more implants (7) adapted to be installed on a dental arch (4) according to the previous claim, **characterised in that** said prosthesis (6) is obtained by means of the method according to claim 15.
